# DEMANDE DE BREVET EUROPEEN

(11) **EP 4 404 403 A1**
(43) Date de publication de la demande: **24.07.2024**
(21) Numéro de dépôt: 24150581.7
(22) Date de dépôt: 05.01.2024
(51) Int. Cl.: H02G 3/12, H02G 3/10

(54) **ACCESSOIRE DE MONTAGE DE SOCLES DE MÉCANISMES D'APPAREILLAGES ÉLECTRIQUES ET/OU ÉLECTRONIQUES DANS UN CONDUIT PROFILÉ ET BLOC MULTI-APPAREILLAGES OU GOULOTTE ÉLECTRIQUE ÉQUIPÉ(E) D'UNE PLURALITÉ D'UN TEL ACCESSOIRE**

(30) Priorité: 23.01.2023 FR 2300614
(71) Demandeur: Legrand France, 87000 Limoges (FR); Legrand SNC, 87000 Limoges (FR)
(72) Inventeur: COUTANT, Régis, 72140 Mont-Saint-Jean (FR)
(74) Mandataire: Jacobacci Coralis Harle

(57) **Abrégé**

L'invention concerne un appareillage électrique comportant un conduit profilé avec deux ailes parallèles comportant chacune une rainure dans laquelle sont enfilés plusieurs accessoire (100) pour le montage de socles de mécanismes d'appareillages dans l'ouverture longitudinale du conduit profilé, chaque accessoire se présentant sous la forme d'une barrette comportant des moyens de montage (120) pour être solidarisé à une aile dudit conduit, et des moyens de réception (130) adaptés à coopérer avec des moyens d'accrochage des socles de mécanismes d'appareillages.

Selon l'invention, lesdits moyens de réception sont interrompus par des ouvertures (133,134) espacées régulièrement le long de ladite barrette, pour le passage de nervures de détrompage prévues sur lesdits socles à proximité desdits moyens d'accrochage.

## Description

La présente invention concerne, de manière générale, le montage direct de divers mécanismes d'appareillages électriques et/ou électroniques dans l'ouverture longitudinale d'un conduit profilé formant des rails de montage.

L'invention concerne plus particulièrement un appareillage électrique selon le préambule de la revendication 1.

On connaît notamment du document EP0986157 un accessoire pour le montage de socles de mécanismes d'appareillages électriques et/ou électroniques dans l'ouverture longitudinale d'un conduit profilé, accessoire se présentant sous la forme d'une barrette qui comporte, d'une part, des moyens de montage pour être solidarisé à une aile dudit conduit profilé, et, d'autre part, des moyens de réception adaptés à coopérer avec des moyens d'accrochage des socles de mécanismes d'appareillages.

Cependant, cet accessoire ne permet pas le montage direct de socles de mécanismes d'appareillages équipés de détrompeurs car les détrompeurs constituent une gêne qui empêche l'accrochage des socles sur les moyens de réception dudit accessoire.

Certaines gammes d'appareillages comportent des socles équipés de détrompeurs qui se présentent essentiellement sous la forme de nervures. Les détrompeurs permettent de particulariser une gamme en y associant les composants d'une même gamme particulièrement agencés pour accepter lesdits détrompeurs et en interdisant d'y associer les composants d'une autre gamme non adaptés auxdits détrompeurs.

Actuellement, il n'est pas possible de monter directement des socles équipés de détrompeurs dans l'ouverture longitudinale d'un conduit profilé. La mise en place de socles de mécanismes d'appareillages avec détrompeurs est réalisée par l'intermédiaire de supports d'appareillage spécifiques préalablement rapportés dans le conduit profilé. Ces supports disposent de rainures particulières pour la réception des détrompeurs desdits socles.

Dans ce contexte, la présente invention propose un nouvel appareillage électrique configuré pour permettre l'accrochage direct de socles de mécanismes d'appareillages pourvus de détrompeurs.

Plus particulièrement, l'invention propose un appareillage électrique selon la revendication 1.

D'autres caractéristiques de l'appareillage électrique conforme à l'invention sont explicitées dans les revendications 2 à 11.

L'appareillage électrique selon l'invention, forme avantageusement un bloc multi-appareillages à poser sur un support quelconque ou à encastrer dans une paroi. Il peut également former une goulotte électrique à fixer sur une paroi de réception.

La description qui va suivre en regard des dessins annexés, donnés à titre d'exemples non limitatifs, fera bien comprendre en quoi consiste l'invention et comment elle peut être réalisée.

Sur les dessins annexés :
La figure 1 est une vue schématique en perspective avant d'un boîtier vide d'un bloc multi-appareillages selon l'invention,
La figure 2 est une vue schématique en perspective avant du boîtier de la figure 1 équipé de divers appareillages électriques,
La figure 3 une vue schématique en perspective avant du boîtier de la figure 1 équipé d'autres appareillages électriques,
La figure 4 est une vue schématique en perspective semi éclatée d'une partie du boîtier de la figure 1,
La figure 5 est une vue partielle en coupe longitudinale du boîtier de la figure 1,
La figure 6 est une vue schématique partielle en perspective éclatée du conduit profilé du boîtier de la figure 1,
La figure 7 est une vue de détail d'une extrémité du conduit profilé partiellement éclaté du boîtier de la figure 1,
La figure 8 est une vue en perspective avant d'un mode de réalisation préférentiel de l'accessoire conforme à l'invention,
La figure 9 est une vue arrière de l'accessoire de la figure 8,
La figure 10 est une vue partielle en perspective du conduit profilé du boîtier de la figure 1 dans lequel est rapporté un mécanisme d'appareillage d'un premier type,
La figure 11 est une vue agrandie d'un détail de la figure 10,
La figure 12 est une vue partielle en perspective du conduit profilé du boîtier de la figure 1 dans lequel est rapporté un mécanisme d'appareillage d'un second type, et
La figure 13 est une vue agrandie d'un détail de la figure 12.

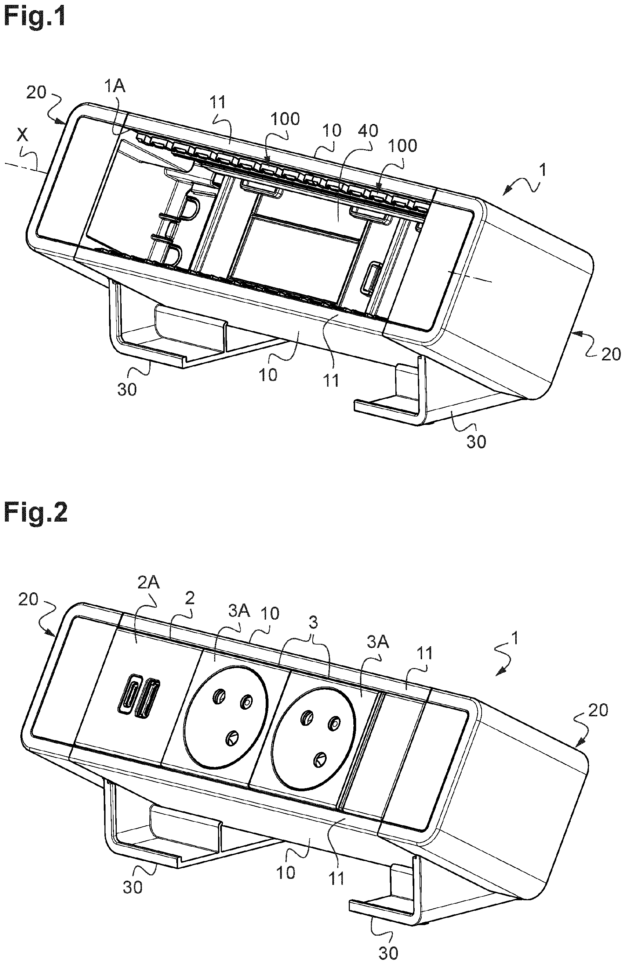

Sur les figures 1 à 3, on a représenté un bloc multi-appareillages 1 à poser sur un support quelconque (tel un bureau, une table). Il s'agit d'un bloc nourrice multiprises. Ce bloc comporte un boîtier présentant, à l'avant, une ouverture longitudinale 1A s'étendant selon l'axe longitudinal X dudit bloc multi-appareillages 1, et, à l'arrière, une paroi de fond 40 faisant face à ladite ouverture longitudinale 1A. Il est formé par un conduit profilé, d'axe longitudinal X, dont les deux extrémités sont fermées par des embouts 20. Le bloc multi-appareillages 1 comporte deux pieds 30 solidarisés auxdits embouts 20 et par lesquels il peut reposer sur le support de réception. Une plaque fixée aux pieds 30 forme la paroi de fond 40 du boîtier dudit bloc multi-appareillages 1.

Comme le montrent plus particulièrement les figures 1, 4 et 7, le conduit profilé comprend deux ailes 10 identiques parallèles.

Chaque aile 10 est réalisé par extrusion d'une matière synthétique ou métallique (telle que l'aluminium).

Chaque aile 10 se présente sous la forme d'une plaque rectangulaire avec bord longitudinal avant 11 et un bord longitudinal arrière 11' parallèles à l'axe longitudinal X.

L'ouverture longitudinale 1A du boîtier du bloc multi-appareillages 1 correspond à l'ouverture longitudinale du conduit profilé. Cette ouverture longitudinale 1A est définie entre les bords longitudinaux avant 11 des deux ailes 10. La paroi de fond 40 du boîtier dudit bloc multi-appareillages 1 ferme l'espace défini entre les bords longitudinaux arrières 11' desdites ailes 10.

Chaque aile 10 présente une face externe 10A lisse et une face interne 10B qui porte une pluralité de nervures.

Le bord longitudinal avant 11 de chaque aile 10 est formé par un retour qui s'étend perpendiculairement à ladite face interne 10B en direction de l'autre aile 10. Ce retour 11 comporte un bord tombant 11A longitudinal qui s'étend vers le bord longitudinal arrière 11', en regard de la face interne 10B de l'aile 10. Le retour 11, le bord tombant 11A et une partie de la face interne 10B de l'aile 10 délimitent une première rainure 11B, ouverte vers l'arrière du conduit profilé, qui court le long du bord longitudinal avant 11 de l'aile 10.

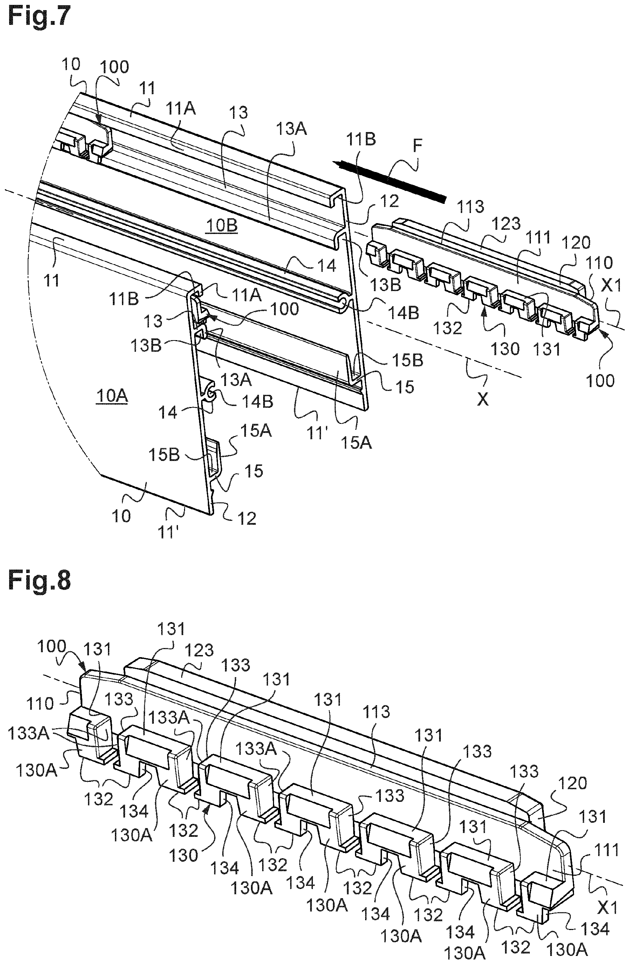

Chaque aile 10 porte également sur sa face interne 10B d'autres nervures 13, 14 et 15 qui s'étendent en parallèle, le long des bords longitudinaux avant 11 et arrière 11'. Une desdites nervures 14 située sensiblement à mi-chemin entre les bords longitudinaux avant 11 et arrière 11' de l'aile 10, présente un profil en forme de portion de cylindre de sorte qu'elle définit intérieurement un conduit cylindrique 14B (voir figure 7). Une autre nervure 13 située à proximité du bord longitudinal avant 11 comporte un profil en L avec un bord tombant 13A dirigé vers le bord longitudinal arrière 11', s'étendant en regard de la face interne 10B de l'aile 10. La nervure 13 et une partie de la face interne 10B de ladite aile 10 délimitent une deuxième rainure 13B, ouverte vers l'arrière du conduit profilé, parallèle à la première rainure 11B (voir figure 7). Enfin, une autre nervure 15 située à proximité du bord longitudinal arrière 11' comporte un profil en L avec un bord montant 15A dirigé vers le bord longitudinal avant 11, s'étendant en regard de la face interne 10B de l'aile 10. La nervure 15 et une partie de la face interne 10B de ladite aile 10 délimitent une troisième rainure 15B, ouverte vers l'avant du conduit profilé, parallèle à la première et à la deuxième rainures 11B, 13B (voir figure 7).

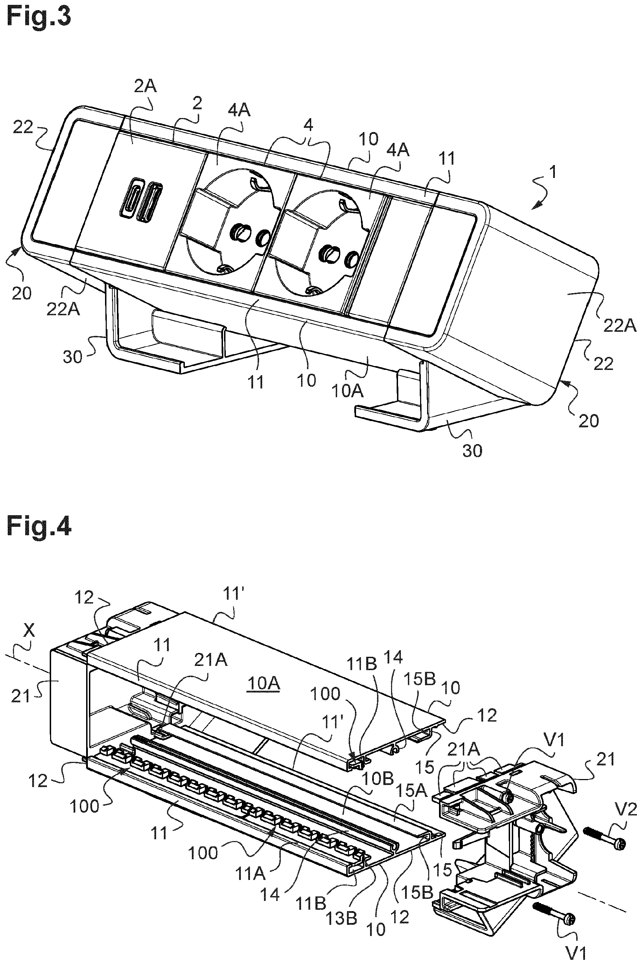

Comme le montrent les figures 3 à 6, chaque embout 20 comporte une partie structurelle 21 et un capot 22. Les parties structurelles 21 des embouts 20 sont rapportées sur les bords d'extrémité 12 des ailes 10 du conduit profilé pour fermer l'espace situé entre lesdits bords d'extrémité 12 et fixer l'écartement entre les deux ailes 10. En conséquence, les parties structurelles 21 fixent la largeur de l'ouverture longitudinale 1A du boîtier du bloc multi-appareillages 1. Les pieds 30 sont solidarisés (par encliquetage) aux parties structurelles 21 des embouts 20.

Comme le montrent plus particulièrement les figures 4 à 6, chaque partie structurelle 21 comporte des languettes 21A glissées dans les rainures 11B, 13B, 15B prévues sur la face interne 10B des ailes 10 pour ajuster la position desdites parties structurelles 21 sur lesdites ailes 10. En outre, pour chaque partie structurelle 21, il est prévu deux vis V1 engagées au travers de deux fourreaux de ladite partie structurelle 21 et vissées dans lesdits conduits cylindriques 14B des deux ailes 10 pour solidariser chaque partie structurelle 21 de chaque embout 20 aux extrémités 12 desdites ailes 10. Sur une partie structurelle 21, celle de droite sur la figure 4, il est prévu une bride (non représentée) de maintien du câble d'alimentation électrique du bloc multi-appareillages (non représenté). Cette bride est serrée sur la partie structurelle 21 par une vis V2 vissée dans un fourreau de réception de ladite partie de structurelle 21.

Comme le montre la figure 3, les capots 22 des embouts 20 sont encliquetés sur la parties structurelles 21 pour les recouvrir et parfaire l'esthétique de l'ensemble. La face externe 22A des capots 22 forme une partie de la face externe du bloc multi-appareillages 1 en s'étendant à effleurement de la face externe 10A des ailes 10 du conduit profilé et en établissant une jonction entre lesdites faces externes 10A desdites ailes 10.

Avantageusement, le bloc multi-appareillages 1 comporte des accessoires 100 pour le montage de socles 200 ;300 de mécanismes d'appareillages électriques et/ou électroniques dans l'ouverture longitudinale 1A du conduit profilé de son boîtier (voir figures 1, 10 à 13).

Comme le montrent les figures 2 et 3, grâce aux accessoires 100, qui vont être décrits en détail ci-après, ici, il est possible de rapporter trois mécanismes d'appareillages 2, 3, 4 dans le conduit profilé de sorte que les façades fonctionnelles 2A, 3A, 4A de ces mécanismes ferment l'ouverture longitudinale 1A.

Selon une configuration, représentée sur la figure 2, le bloc multi-appareillages 1 comporte deux mécanismes de prises de courant franco-belge 3 et un mécanisme de prises USB 2.

Selon une autre configuration, représentée sur la figure 3, le bloc multi-appareillages 1 comporte deux mécanismes de prise de courant au standard germanique 4 et un mécanisme de prises USB 2.

Chaque accessoire 100 se présente sous la forme d'une barrette, d'axe longitudinal X1, à enfiler dans la rainure 11B prévue, le long du bord longitudinal avant 11, sur la face interne 10B d'une aile 10 du conduit profilé du boîtier du bloc multi-appareillages 1.

Ici, il est prévu deux accessoires 100 par ailes 10 soit deux barrettes placées bout à bout dans la rainure 11B correspondante de chaque aile 10 du conduit profilé.

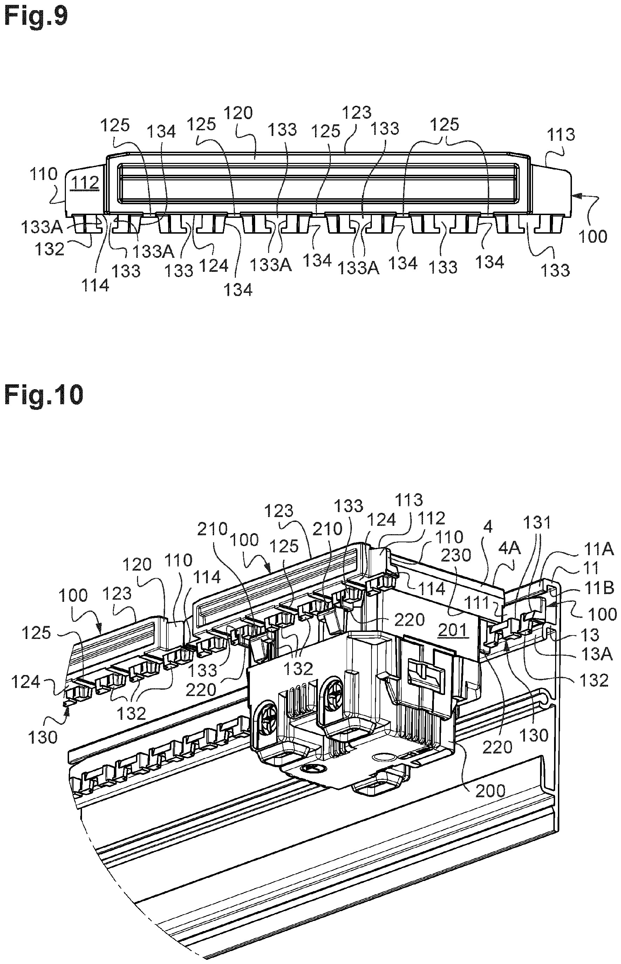

Chaque accessoire 100 comporte, d'une part, des moyens de montage 120 pour être solidarisé à une aile 10 dudit conduit profilé, et, d'autre part, des moyens de réception 130 adaptés à coopérer avec des moyens d'accrochage 210,230 ;310,330 des socles 200 ;300 de mécanismes d'appareillages 4, 5 (voir figures 10 à 13).

Comme le montrent les figures 8 à 13, selon une caractéristique remarquable de chaque accessoire 100, lesdits moyens de réception 130 sont interrompus par des ouvertures 133,134 espacées régulièrement le long de l'axe longitudinal X1 de ladite barrette, pour le passage de nervures de détrompage 220 ; 320 prévues sur lesdits socles 200 ;300 à proximité desdits moyens d'accrochage 210,230 ;310,330.

Chaque accessoire 100 est une barrette monobloc réalisée par moulage d'une matière plastique ou synthétique rigide. Il comprend deux parties 110, 120 qui s'étendent selon l'axe longitudinal X1 de ladite barrette (voir figure 8).

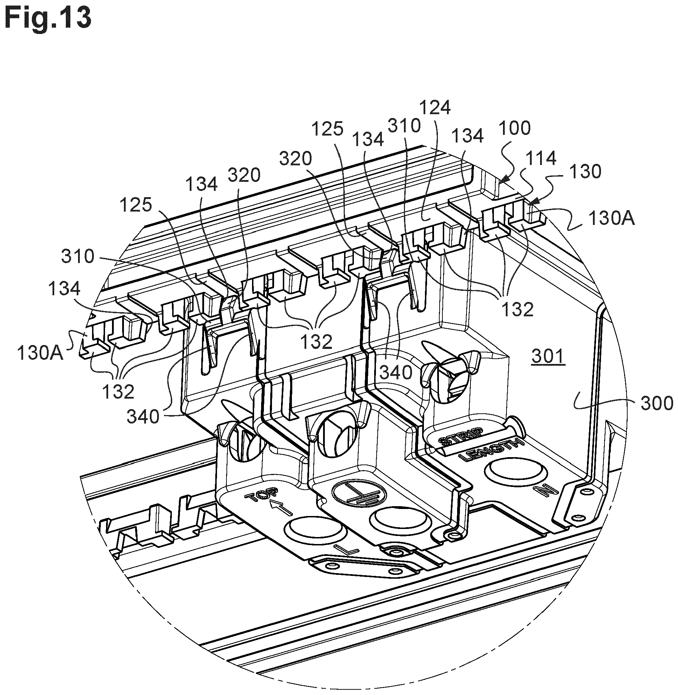

Comme le montrent les figures 8 et 9, une des parties est un plastron 110 qui est délimité par un bord longitudinal supérieur 113 et un bord longitudinal inférieur 114. Le plastron 110 présente une face avant longitudinale 111 et une face arrière longitudinale 112 parallèles. L'autre partie est un coulisseau 120, prévu sur la face arrière longitudinale 112 du plastron 110. Le coulisseau 120 est délimité par un bord longitudinal supérieur 123 et un bord longitudinal inférieur 124. Le coulisseau 120 comporte une partie qui déborde du bord longitudinal supérieur 113 du plastron 110 et qui est adaptée à glisser dans la rainure 11B correspondante de l'aile 10 dudit conduit profilé. Le bord longitudinal inférieur 124 du coulisseau 120 s'étend au même niveau que ledit bord longitudinal inférieur 114 du plastron 110 pour former un seul bord longitudinal inférieur de ladite barrette (voir figures 10 et 13).

Le coulisseau 120 de chaque accessoire 100 forme lesdits moyens de montage pour sa solidarisation à une aile 10 du conduit profilé et la face avant longitudinale 111 du plastron 110 de chaque accessoire 100 porte lesdits moyens de réception 130 adaptés à coopérer avec les moyens d'accrochage 210,230 ;310,330 des socles 200 ;300 de mécanismes d'appareillage.

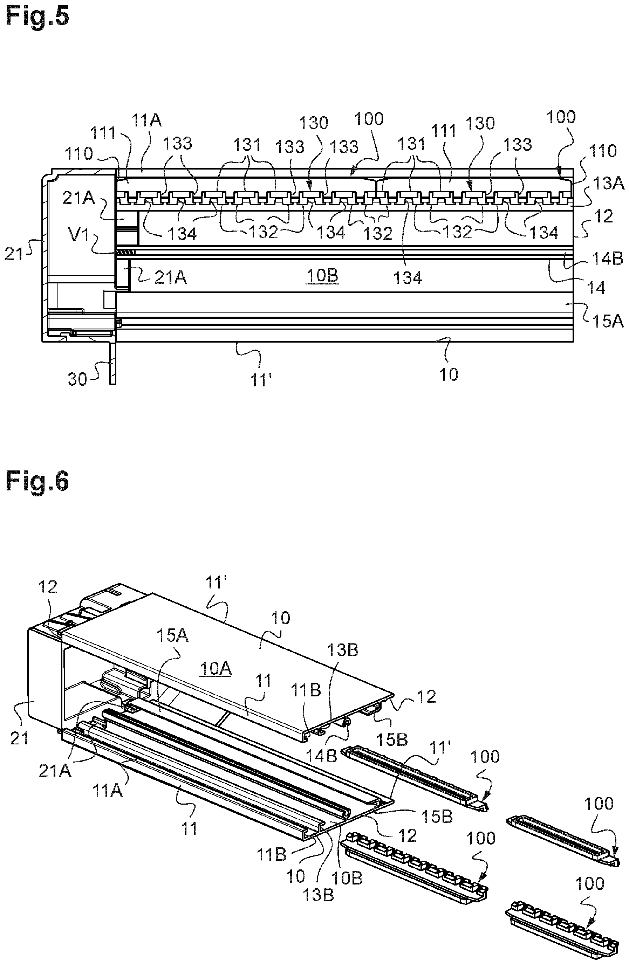

Comme le montrent les figures 5 à 7, avant de rapporter au moins un des deux embouts 20 sur les extrémités 12 des ailes 10 du conduit profilé, chaque accessoire 100 est présenté à une extrémité 12 d'une aile 10 de sorte que son axe longitudinal X1 est parallèle à l'axe longitudinal X du conduit profilé. La partie débordante du coulisseau 120 de chaque accessoire 100 est glissée selon la flèche F (voir figure 7) dans la rainure 11B de l'aile 10 correspondante pour solidariser l'accessoire 100 à l'aile 10. En fonction de la longueur du conduit profilé, on peut enfiler plusieurs accessoires 100 dans la rainure 11B de chaque aile 10 du conduit profilé pour équiper d'accessoires 100 toute la longueur de la rainure 11B de chaque aile 10. Ici, comme le montre la figure 6, on enfile deux accessoires 100 dans la rainure 11B de chaque aile 10 du conduit profilé. Les accessoires 100 sont positionnés bout à bout dans la rainure 11B de chaque aile 10 du conduit profilé de telle manière que les faces avant longitudinales 111 des plastrons 110 des accessoires 100 sont tournées vers l'intérieur du conduit profilé et s'étendent dans le prolongement et à effleurement de la face avant du bord tombant 11A du bord longitudinal avant 11 de ladite aile 10 (voir figure 5). Lesdits moyens de réception 130 portés par la face avant longitudinale 111 du plastron 110 des accessoires 100 font saillie de la face interne 10B de chaque aile 10 vers l'intérieur du conduit profilé en étant alignés le long de l'axe longitudinal X du conduit profilé. En particulier, ils font saillie du bord tombant 13A de la nervure 13 de chaque aile 10.

Les accessoires 100 sont bloqués en coulissement dans les rainures 11B des ailes 10 du conduit profilé grâce aux embouts 20 rapportés et fixés aux extrémités 12 desdites ailes 10.

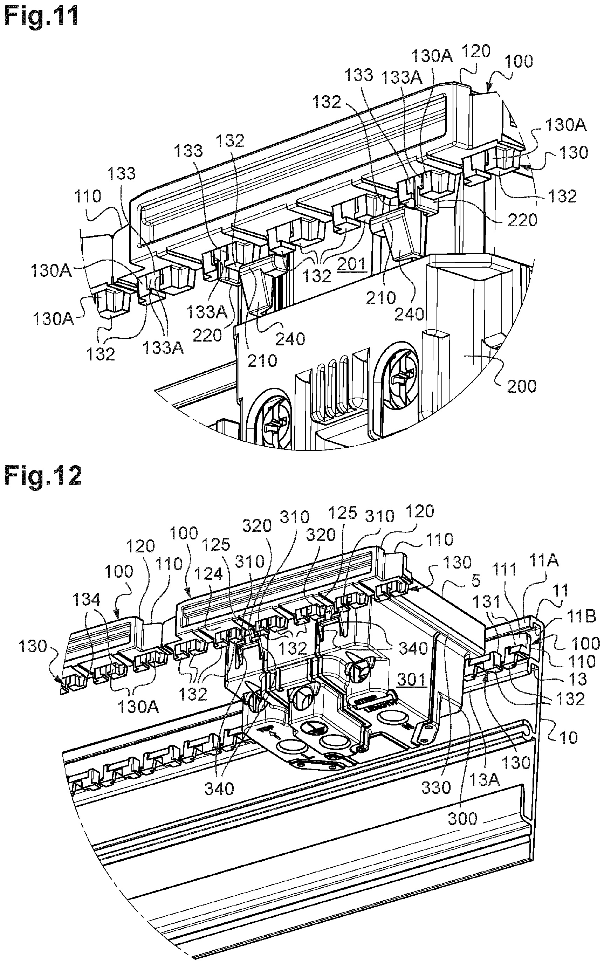

Comme le montre la figure 8, selon l'exemple préférentiel représenté, lesdits moyens réception 130 de l'accessoire 100 comprennent deux bandes 131, 132 parallèles s'étendant selon l'axe longitudinal X1 de ladite barrette. Une des bandes est une bande supérieure 131 qui sert de support pour une partie supérieure 230 ;330 de chaque socle 200 ;300 (voir figures 10 et 12). L'autre bande est une bande inférieure 132 servant de surface d'accrochage pour des dents d'encliquetage 210 ;310 prévues sur la face externe 201 ;301 dudit socle 200 ;300.

Ici, les moyens de réception se présentent sous la forme d'une réglette 130 à laquelle appartiennent lesdites bandes supérieure 131 et inférieure 132. Ladite réglette 130 déborde du bord longitudinal inférieur 114,124 de la barrette (l'accessoire 100) de sorte que ladite bande inférieure 132 de ladite réglette 130 est située en arrière dudit bord longitudinal inférieur 114,124. Une partie au moins desdites ouvertures 133 prévues dans lesdits moyens de réception, séparent ladite réglette 130 en une série de plots 130A de réception (voir figures 8 et 9).

Avantageusement, l'accessoire 100, représenté sur les différentes figures, autorise le montage d'un premier type de socle 200 de mécanisme d'appareillage 4 représenté sur les figures 10 et 11 et d'un deuxième type de socle 300 de mécanisme d'appareillage 5 représenté sur les figures 12 et 13. Les premier et deuxième type de socles 200 ;300 sont pourvus de deux types différents de nervures de détrompage 220 ;320.

Plus particulièrement, le premier type de socle 200 de mécanisme d'appareillage représenté sur les figures 10 et 11, comprend deux pans opposés de sa face externe 201 qui portent en saillie deux dents d'encliquetage 210 prévues aux extrémités de rampes d'engagement inclinées 240. Chaque pan de la face externe 201 du socle 200 porte également en saillie, à côté de chaque dent d'encliquetage 210, une nervure de détrompage 220 présentant un profil en L inversé. Chaque nervure de détrompage 220 est prévue entre la dent d'encliquetage 210 et un coin du socle 200.

Le deuxième type de socle 300 de mécanisme d'appareillage représenté sur les figures 12 et 13, comprend également deux pans opposés de sa face externe 301 qui portent en saillie deux dents d'encliquetage 310 prévues aux extrémités de rampes d'engagement inclinées 340. Mais selon ce deuxième type de socle 300, il est prévu une nervure de détrompage 320 au centre et en saillie de chaque dent d'encliquetage 310.

Dans l'accessoire 100 représenté sur les différentes figures, il est prévu deux types différents d'ouvertures dans lesdits moyens de réception 130, à savoir des ouvertures 133 d'un premier type, adaptées à accueillir les nervures de détrompage 220 du premier type de socle 200 de mécanisme d'appareillage représenté sur les figures 10 et 11 et des ouvertures 134 d'un deuxième type, adaptées à accueillir les nervures de détrompage 320 du deuxième type de socle 300 de mécanisme d'appareillage représenté sur les figures 12 et 13. Les ouvertures 133 du premier type forment des interruptions de ladite bande supérieure 131 desdits moyens de réception 130 tandis que ladite bande inférieure 132 de ces moyens de réception 130 est interrompue par les ouvertures 134 du deuxième type.

Plus particulièrement, lesdites ouvertures 133 séparant lesdits plots 130A de la ladite réglette 130 (formant les moyens de réception) portée par la face longitudinale avant 111 du plastron 110 de l'accessoire 100, sont les ouvertures du premier type. Ces ouvertures 133 sont délimitées par deux bords 133A en vis-à-vis en forme de L (voir figure 8). En outre, chaque plot 130A de ladite réglette 130 comporte, dans une zone centrale, une ouverture 134 du deuxième type se présentant sous la forme d'une encoche qui débouche sur ladite bande inférieure 132 et qui donne accès audit bord longitudinal inférieur 114,124 de ladite barrette formant l'accessoire 100 (voir figures 8 et 9). Comme le montre mieux la figure 13, le bord longitudinal inférieur 114, 124 de l'accessoire 100 comporte au droit de chaque encoche 134, une bande en surépaisseur 125.

Comme le montrent les figures 10 et 11, le socle 200 du premier type du mécanisme d'appareillage 4 est rapporté au travers l'ouverture longitudinale 1A du bloc multi-appareillages 1 de telle sorte qu'une partie avant 230 de ce socle 200 repose sur la bande supérieure 131 des moyens de réception 130 des accessoires 130 enfilés dans les rainures 11B des ailes 10 du conduit profilé et que les dents d'encliquetage 210 de ce socle 200 s'accrochent sur la bande inférieure 132 des moyens de réception 130 desdits accessoires 100. Ainsi, les moyens d'accrochage du socle 200 prennent en sandwich lesdits moyens de réception 130 desdits accessoires 100 et immobilisent le socle 200 dans l'ouverture longitudinale 1A du bloc multi-appareillages 1. Dans cette position de montage, la façade fonctionnelle 4A du mécanisme d'appareillage 4 s'étend dans ladite ouverture longitudinale 1A du bloc multi-appareillages 1 à effleurement des bords longitudinaux avant 11 des ailes 10 du conduit profilé. De manière concomitante, les nervures de détrompage 220 prévues sur la face externe 201 du socle 200 s'engagent dans les ouvertures 133 du premier type, correspondantes, prévues dans lesdits moyens de réception 130 desdits accessoires 100. On notera que ces nervures de détrompage 220 présentent un profil en L inversé de sorte qu'avantageusement, elles s'accrochent sur un bord 133A en forme de L desdites ouvertures 133 (voir figure 11). Lesdites nervures de détrompage 220 participent également au maintien du socle 200 sur les ailes 10 dudit conduit profilé.

Comme le montrent les figures 12 et 13, le socle 300 du deuxième type du mécanisme d'appareillage 5 est rapporté au travers de l'ouverture longitudinale 1A du bloc multi-appareillages 1 de telle sorte qu'une partie avant 330 de ce socle 300 repose sur la bande supérieure 131 des moyens de réception 130 des accessoires 100 enfilés dans les rainures 11B des ailes 10 du conduit profilé et que les dents d'encliquetage 310 de ce socle 300 s'accrochent sur la bande inférieure 132 des moyens de réception 130 desdits accessoires 100. Ainsi, les moyens d'accrochage du socle 300 prennent en sandwich lesdits moyens de réception 130 desdits accessoires 100 et immobilisent le socle 300 dans l'ouverture longitudinale 1A du bloc multi-appareillages 1. Dans cette position de montage, la façade fonctionnelle du mécanisme d'appareillage 5 s'étend dans ladite ouverture longitudinale 1A du bloc multi-appareillages 1 à effleurement des bords longitudinaux avant 11 des ailes 10 du conduit profilé. De manière concomitante, les nervures de détrompage 320 prévues sur la face externe 301 du socle 300 s'engagent dans les ouvertures 134 du deuxième type (en forme d'encoches), correspondantes, prévues dans lesdits moyens de réception 130 desdits accessoires 100. On notera que ces nervures de détrompage 320 s'engagent dans lesdites encoches 134 pour s'accrocher sur des bandes en surépaisseur 125 du bord longitudinal inférieur 114,124 de l'accessoire 100 correspondant. Lesdites nervures de détrompage 320 participent également au maintien du socle 300 sur les ailes 10 dudit conduit profilé.

L'utilisation de l'accessoire 100 conforme à l'invention (décrit ci-dessus) permet d'équiper de manière aisée et flexible des conduits profilés pour qu'ils soient capables de recevoir directement, sans utiliser de support d'appareillage, des gammes particulières d'appareillages électriques dont les socles sont pourvus de nervures de détrompage. De tels conduits profilés peuvent constituer des boîtiers de bloc multi-appareillages à poser sur un support (comme celui qui vient d'être décrit dans le détail) ou à encastrer dans une paroi. Ils peuvent également former une goulotte électrique à fixer sur une paroi de réception quelconque.

## Revendications

1. Appareillage électrique (1) comportant un conduit profilé avec deux ailes (10) longitudinales parallèles dont les bords avant (11) délimitent entre eux une ouverture longitudinale (1A) s'étendant selon l'axe longitudinal (X) dudit conduit profilé, les ailes (10) comportant sur une face interne (10B), le long de leur bord avant (11), deux rainures (11B) dans lesquelles sont enfilés plusieurs accessoires (100) pour le montage de socles de mécanismes d'appareillages électriques et/ou électroniques dans l'ouverture longitudinale (1A) du conduit profilé, chaque accessoire (100) se présentant sous la forme d'une barrette qui comporte, d'une part, des moyens de montage (120) pour être solidarisé à une aile (10) dudit conduit profilé, et, d'autre part, des moyens de réception (130) adaptés à coopérer avec des moyens d'accrochage (210,230 ;310,330) des socles (200 ;300) de mécanismes d'appareillages, lesdits moyens de réception (130) des accessoires (100) faisant saillie desdites faces internes (10B) desdites ailes (10) vers l'intérieur dudit conduit profilé en s'étendant le long dudit axe longitudinal (X), **caractérisé en ce que** lesdits moyens de réception (130) de chaque accessoire (100) sont interrompus par des ouvertures (133,134) espacées régulièrement le long de ladite barrette, pour le passage de nervures de détrompage (220 ; 320) prévues sur lesdits socles (200 ;300) à proximité desdits moyens d'accrochage (210,230 ;310,330).

2. Appareillage électrique (1) selon la revendication 1, **caractérisé en ce que** chaque accessoire (100) comprend deux parties qui s'étendent selon l'axe longitudinal (X) de ladite barrette, à savoir, d'une part, un plastron (110) qui est délimité par un bord longitudinal supérieur (113) et un bord longitudinal inférieur (114) et qui présente une face avant longitudinale (111) portant lesdits moyens de réception (130) et, d'autre part, un coulisseau (120), prévu sur la face arrière longitudinale (112) du plastron (110), comportant une partie qui déborde du bord longitudinal supérieur (113) du plastron (110) et qui est adaptée à glisser dans une rainure (11B) de l'aile (10) dudit conduit profilé, le coulisseau (120) présentant un bord longitudinal inférieur (124) qui s'étend au même niveau que ledit bord longitudinal inférieur (114) dudit plastron (110) pour former un seul bord longitudinal inférieur de ladite barrette.

3. Appareillage électrique (1) selon l'une des revendications 1 et 2, **caractérisé en ce que** lesdits moyens réception (130) de chaque accessoire (100) comprennent deux bandes parallèles s'étendant selon l'axe longitudinal de ladite barrette, à savoir une bande supérieure (131) servant de support pour une partie supérieure (230 ;330) de chaque socle (200 ;300) et une bande inférieure (132) servant de surface d'accrochage pour des dents d'encliquetage (210 ;310) dudit socle (200 ;300).

4. Appareillage électrique (1) selon l'une des revendications 1 à 3, **caractérisé en ce qu'**il est prévu deux types différents d'ouvertures dans lesdits moyens de réception (130), à savoir des ouvertures (133) d'un premier type, adaptées à accueillir une première forme de nervures de détrompage (220) et des ouvertures (134) d'un deuxième type, adaptées à accueillir une deuxième forme de nervures de détrompage (320).

5. Appareillage électrique (1) selon l'une des revendications 3 et 4, **caractérisé en ce que** ladite bande supérieure (131) est interrompue par les ouvertures (133) du premier type tandis que ladite bande inférieure (132) est interrompue par les ouvertures du deuxième type.

6. Appareillage électrique (1) selon l'une des revendications 3 à 5, **caractérisé en ce que** les moyens de réception se présentent sous la forme d'une réglette (130) à laquelle appartiennent lesdites bandes supérieure (131) et inférieure (132), ladite réglette (130) débordant du bord longitudinal inférieur (114,124) de la barrette de sorte que ladite bande inférieure (132) de ladite réglette (130) est située en arrière dudit bord longitudinal inférieur (114,124), une partie au moins desdites ouvertures (133) séparant ladite réglette (130) en une série de plots (130A) de réception.

7. Appareillage électrique (1) selon les revendications 5 et 6, **caractérisé en ce que** lesdites ouvertures (133) séparant lesdits plots (130A) sont les ouvertures du premier type dont un bord sert d'accrochage à une nervure de détrompage (220) d'un socle (200) de mécanisme d'appareillage.

8. Appareillage électrique (1) selon l'une des revendications 6 et 7, **caractérisé en ce que** chaque plot (130A) comporte, dans une zone centrale, une ouverture (134) du deuxième type se présentant sous la forme d'une encoche qui débouche sur ladite bande inférieure (132) et qui donne accès audit bord longitudinal inférieur (114,124) de la barrette pour l'accrochage d'une nervure de détrompage (320) d'un socle (300) de mécanisme d'appareillage.

9. Appareillage électrique (1) selon l'une des revendications précédentes, **caractérisé en ce que** chaque accessoire (100) est formé d'une seule pièce par moulage d'une matière synthétique rigide.

10. Appareillage électrique (1) selon l'une des revendications 1 à 9, qui forme un bloc multi-appareillages (1) à poser sur un support quelconque ou à encastrer dans une paroi.

11. Appareillage électrique selon l'une des revendications 1 à 9, qui forme une goulotte électrique à fixer sur une paroi de réception.
